(19) Europäisches Patentamt
European Patent Office
Office européen des brevets

(11) **EP 0 472 373 B1**

(12) **EUROPEAN PATENT SPECIFICATION**

(45) Date of publication and mention
of the grant of the patent:
**17.03.1999   Bulletin 1999/11**

(51) Int Cl.6: **H04N 9/44**, H04N 9/465

(21) Application number: **91307571.9**

(22) Date of filing: **16.08.1991**

(54) **Horizontal-scanning periodic signal generators**

Generator für periodische Horizontalablenkungssignale

Générateurs de signal périodique de balayage horizontal

(84) Designated Contracting States:
**DE FR GB**

(30) Priority: **18.08.1990   JP   217805/90**

(43) Date of publication of application:
**26.02.1992   Bulletin 1992/09**

(73) Proprietors:
• **FUJITSU LIMITED**
  **Kawasaki-shi, Kanagawa 211 (JP)**
• **FUJITSU DEVICES INC**
  **Chiyoda-Ku, Tokyo (JP)**

(72) Inventor: **Tanaka, Masahiko**
**Nagoya-shi, Aichi 455 (JP)**

(74) Representative:
**Fane, Christopher Robin King et al**
**Haseltine Lake & Co.,**
**Imperial House,**
**15-19 Kingsway**
**London WC2B 6UD (GB)**

(56) References cited:
**EP-A- 0 392 618**          **DE-A- 3 212 655**
**US-A- 4 769 704**

• **ELEKTOR ELECTRONICS, vol.14, no.158+supp.,**
  **July-August, 1988, London, GB, page**
• **14-17; J.C. STEKELENBURG:**
  **'Chrominance-locked clock generator'**

## Description

The present invention relates to horizontal-scanning periodic signal generators for use, for example, in a phase-alternation-by-line color television system (PAL-system).

Three different systems have been used as color television standards a national television system committee color television system (NTSC-system) is employed in Japan, the United States, Korea, and the like; a PAL-system is employed in the United Xingdom, Germany, and the like; and a sequential-a-memoire color television system (SECAM-system) is employed in France, and the like.

The PAL-system has basically the same configuration as the NTSC-system, but in the PAL-system, two chrominance signals are transferred so that a phase of one of the two chrominance signals is inverted by each line. This phase inversion in the PAL-system is used to correct the change caused by transmission lines, and thus saturation distortion can be considerably reduced.

In the PAL-system, the frequency of the basic clock [$4 \times 625 \times F_{SC}$] (Hz) has been extremely high, and thus there are problems of large numbers of bits used for the counter and the like and a large circuit scale.

In order to solve these problems, an approximate equation may be used instead of an original equation. When using the approximate equation, the frequency of the basic clock can be reduced to [$4 \times F_{SC}$] (Hz) which is lower by a factor of 625 than the above frequency of the basic clock [$4 \times 625 \times F_{SC}$] (Hz), so that the bits used for the counter and the like can be reduced and the circuit can be reduced in size.

However, an error between the frequency of the color subcarrier (color burst signal) obtained by the approximate equation and the exact frequency of the color subcarrier is caused, so that a change of light and darkness between the adjacent scanning lines may be caused. Therefore, when displaying an image of a small movement, e. g., an image of characters, a flicker (or dot interference) may be caused, and the quality of the display image may be decreased. Note, the above problems will be explained later with reference to the accompanying drawings.

A known device for generating a horizontal synchronizing signal for use in a PAL-type television system, described in US 4769704, may be considered to include clock generation means for generating a basic clock signal having a frequency that is a preselected multiple of the frequency of a color subcarrier signal of the PAL-type television system; and frequency divider means connected with the said clock generating means and operable, over the course of a vertical scanning period of the PAL-type television system, to perform a series of division cycles including first division cycles of duration equal to a normal horizontal scanning period of the PAL-type television system, in which first division cycles the basic-clock-signal frequency is divided by a first division factor, and also including at least one second division cycle of duration greater than the said normal horizontal scanning period, in which second division cycle the said basic-clock-signal frequency is divided by a second division factor greater than the said first division factor.

In this device, the basic clock is of frequency $4F_{SC}$, where $F_{SC}$ is the color subcarrier frequency and two second division cycles per field (vertical scanning period) are used, each lasting one extra cycle of the basic clock, i. e. one quarter-period of the color subcarrier signal. The composition of the frequency divider means is not described specifically in US 4769704.

DE-A-3212655 also describes circuitry for generating synchronization signals for a PAL-type television system. The circuitry makes use of a sync signal generator which is intended to operate in dependence upon a clock signal whose frequency is a predetermined multiple n (e.g. n = 568) of the horizontal scanning signal frequency. In the sync signal generator, each horizontal scanning period corresponds to n pulses of the clock signal applied to the generator. This clock signal is derived from a basic clock signal, having a frequency of twice the color subcarrier frequency, by an exclusive OR gate an AND gate through which pulses of the basic clock signal pass to reach the sync signal generator. As a result, n pulses are applied to the sync signal generator in a period corresponding to n- $\frac{1}{2}$ pulses of the basic clock. The applied clock signal is slightly too fast and so the horizontal synchronizing signal produced by the sync signal generator has a phase error which increases linearly from 0 to $1/(2F_{SC})$ in each field. This error has to be corrected by passing the horizontal synchronizing signal through phase correcting elements driven by a sawtooth control signal. Thus, the circuitry is undesirably complex.

A device for generating a horizontal synchronizing signal embodying a first aspect of the present invention is characterised in that the said frequency divider means include counter means connected to the said clock generating means for counting pulses of the said basic clock signal and for providing a count value representing the number of pulses counted; first clear signal generation means connected to the said counter means for monitoring the said count value provided by the counter means and for generating a first candidate clear signal when the monitored count value reaches a first value that corresponds to said normal horizontal scanning period; second clear signal generation means connected to the said counter means for monitoring the said count value provided by the counter means and for generating a second candidate clear signal when the monitored count value reaches a second value that corresponds to a prolonged horizontal scanning period that is longer than the said normal horizontal scanning period by an odd multiple of a half-period of the said color subcarrier signal; and selector means, connected to the said first and second clear signal generation means and the said counter means, for selecting the said first candidate clear signal in each said first division cycle of said series and for selecting the said second candidate clear signal in the or each said second division cycle of the said series, the clear signal selected in each division cycle being applied to the said counter means to reset the said count value provided thereby.

In such a device for generating a horizontal scanning periodic signal (or horizontal synchronizing signal) dot interference in the PAL-system can be reduced without unduly increasing the circuit scale.

The relationship between the color subcarrier frequency $F_{SC}$ and a horizontal frequency $F_L$ of the PAL-type television system may be expressed by the approximate equation:

$$F_{SC} = ((4 \times n - 1)/4) \times F_L$$

, where n denotes the position of the color subcarrier signal in a video signal band.

The frequency of said basic clock signal may be preselected to be four times the color subcarrier frequency. The second clear signal generation means may generate the second candidate clear signal when the said count value of said counter means corresponds to a period that is longer by one half-period of the color subcarrier frequency than the said normal horizontal scanning period. The first clear signal generation means may be constituted by a 1135-counter, and the second clear signal generation means may be constituted by a 1137-counter.

The or each said second division cycle, in which the second candidate clear signal is selected, preferably corresponds to a scanning line located on the upper or lower side of each field. For example, the said second division cycle, or one of the second division cycles if more than one, in which the second candidate clear signal is selected, may correspond to the 312th or 625th scanning line of each field.

According to a second aspect of the present invention there is provided video signal generation circuitry including a device for generating a horizontal synchronizing signal embodying the aforesaid first aspect of the present invention. Preferably, the device is included in a SYNC generator of the circuitry which serves to generate such a horizontal synchronizing signal, a vertical synchronizing signal, and various further timing signals in accordance with the said basic clock signal, the circuitry further including: a memory sequencer, connected for receiving command data, command addresses, and a display dot clock, and also connected to the SYNC generator for receiving said horizontal synchronizing signal and said vertical synchronizing signal, and operable to control various memory portions of the circuitry; and a color decoder circuit, operatively connected to said memory sequencer, for decoding red, blue, and green dot signals of a specific display image in accordance with the various timing signals output from said SYNC generator.

The SYNC generator may comprise: a horizontal counter, serving as the said counter means, and connected to said clock generation means for counting the pulses of said basic clock signal and for providing said count value; a horizontal decoder, serving as the said first and second clear signal generation means, and connected to said horizontal counter for monitoring the count value provided by said horizontal counter and generating such first candidate clear signals and such second candidate clear signals, such a second candidate clear signal being output after a period that is longer by a half period of the color subcarrier frequency than the said normal horizontal scanning period; and a selector, serving as the said selector means, and connected to said horizontal decoder for selecting either the first candidate clear signal or the second candidate clear signal, the second candidate clear signal being selected at least once during each said vertical scanning period. Such video signal generation circuitry may be used in an on-screen display controller device (OSDC).

Reference will now be made, by way of example, to the accompanying drawings, wherein:

Figures 1A to 1E are diagrams for explaining a frequency interlace method;
Figures 2A and 2B are diagrame indicating an example of a display image using an NTSC-system;
Figures 3A and 3B are diagrams indicating an example of a display image using a PAL-system;
Figure 4 is a block diagram indicating the basic configuration of a device, for generating a horizontal synchronizing signal, embodying the aforesaid first aspect of the present invention;
Figures 5A and 5B are diagrams indicating an example of a display image obtained by using a device, for generating a horizontal synchronizing signal of a PAL-system, embodying the present invention;
Figure 6 is a block diagram of video signal generation circuitry embodying the aforesaid second aspect of the present invention;
Figure 7 is a block diagram indicating an example of a SYNC generator shown in Fig. 6;
Figure 8 is a block diagram indicating a part of the SYNC generator shown in Fig. 7;
Figure 9 is a circuit diagram indicating an example of a ladder register and analog switch shown in Fig. 6;
Figure 10 is a diagram indicating truth values of the ladder register and analog switch of Fig. 9; and
Figures 11 to 13 are diagrams indicating operational waveforms of a device, for generating the horizontal synchronizing signal, embodying the present invention.

First, for a better understanding of the preferred embodiments, an NTSC-system and problems of a PAL-system will be explained.

In the color television systems of Japan, the United States, and the like, an NTSC-system have been employed due to considerations of the compatibility between color television broadcasting and monochrome (black and white) television broadcasting.

In this NTSC-system, primary colors of red (R), green (G), and blue (B) of an object (or an objective image) are transferred by a luminance signal and color difference signals. First, when those signals are received by a color television receiver, the primary colors are obtained by the luminance signal and the color difference signals, so that a color image of the object can be displayed at the color television receiver. On the other hand, when those signals are received by a monochrome television receiver, a black and white image of the object can be displayed at the monochrome television receiver by only using the luminance signal.

Note, the color difference signals, which are the signals defined by subtracting the luminance signal (Y) from each of the primary colors (R, G, B), are constituted by R-Y, G-Y, and B-Y signals, but only two signals R-Y and B-Y (which are called chrominance signals) are transferred, and the remaining signal G-Y is reproduced at the television receiver in accordance with the transferred two chrominance signals R-Y and B-Y.

Further, the frequency of the luminance signal and the chrominance signals are selected to alternately generate each spectrum of the luminance signal and the chrominance signals within a transmission band (0 to 4 MHz) of the television signals. Namely, the frequency of the chrominance signals is selected such that higher harmonic spectrum of the chrominance signals is included in an interval of a higher harmonic spectrum of the luminance signal (or an interval of a horizontal scanning frequency). Note, this means that the frequency of the chrominance signals (which corresponds to I-signal and Q-signal of a color subcarrier frequency instead of the chrominance signals) is selected as an odd multiple of a half of the horizontal scanning frequency.

Concretely, the authorized color subcarrier frequency is specified as 3.58 MHz (exactly 3.579545 MHz). This frequency corresponds to 455 times the frequency of 7.875 kHz (exactly 7.867132 kHz). The frequency of 7.875 kHz is a half of the horizontal scanning frequency of 15.750 kHz (exactly 15.734264 kHz). Therefore, when a carrier frequency is selected as odd multiple (1, 3, 5, ··· ··· ) of the frequency of 7.875 kHz, the higher harmonic spectrum of the chrominance signals can be included in the center of the higher harmonic frequency of 15.750 kHz.

This frequency allotment, which is carried out by inserting the frequency, is called a frequency interlace method (or frequency interleaving method).

Concretely, in the NTSC-system, the color subcarrier frequency is selected by an equation $(f_H/2) \times 455$ (wherein, $f_H$ is selected as a horizontal scanning frequency). Namely, a position of the color subcarrier frequency can be located at the center between the 227th higher harmonic and 228th higher harmonic of the horizontal scanning frequency (or the frequency of the horizontal synchronizing signal). Therefore, an undesirable phenomenon, for example, a phenomenon of a wave shape image (or stripes) on the received display image when receiving the transferred electric wave, can be eliminated by applying the frequency interlace method.

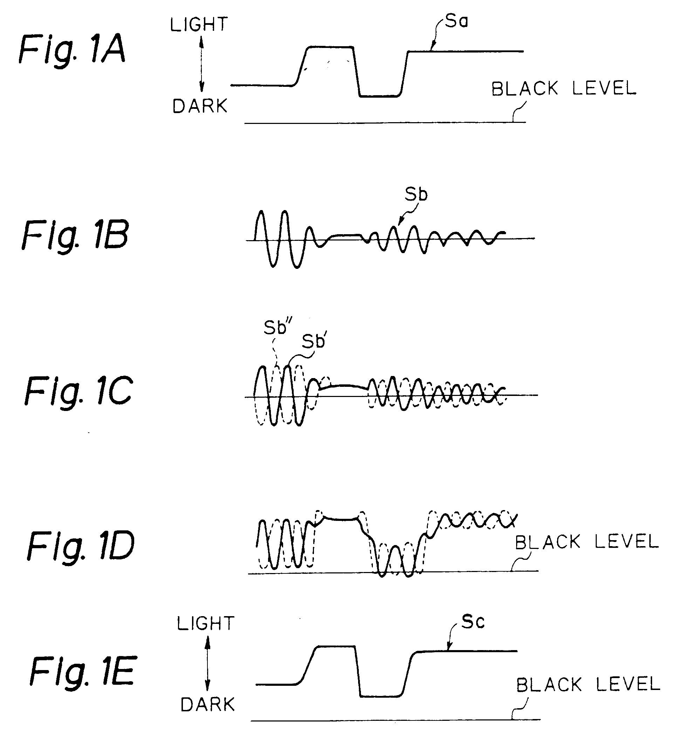

Next, the reasons for eliminating the wave shape image from the received display image will be explained with reference to Figs. 1A to 1E.

Figures 1A to 1E are diagrams for explaining a frequency interlace method. In Figs. 1A to 1E, a reference Sa denotes a luminance signal corresponding to a first scanning line of an optional frame (Fig. 1A) and a reference Sb denotes a chrominance signal (or chrominance signals: Fig. 1B). Variations in the light and darkness are produced on a first scanning line of a television picture tube by the luminance signal Sa. Further, at the same time, variations in the light and darkness are also produced on the television picture tube by the chrominance signal Sb, so that the above undesirable phenomenon may be caused.

Nevertheless, when the color subcarrier frequency is synchronized to the horizontal scanningfrequency, and when the color subcarrier frequency is chosen to be an odd multiple of a half of the horizontal scanning frequency, as shown in Fig. 1C, a phase of a chrominance signal Sb" along the first scanning line of the next frame is opposite to that of a chrominance signal Sb' along a scanning line of the first frame. Therefore, as shown in Fig. 1D, these chrominance signals Sb' and Sb" are mixed, and a wave form Sc is obtained, so that, as shown in Fig. 1E, unwanted variations in light and darkness arising from the chrominance signals can be cancelled.

Namely, when the frequency of the color subcarrier is selected so as to satisfy the equation $(f_H/2) \times 455$, the change in brightness caused by the carrier signal between the two adjacent scanning lines can be made inconspicuous, and thus the visual trouble can be eliminated.

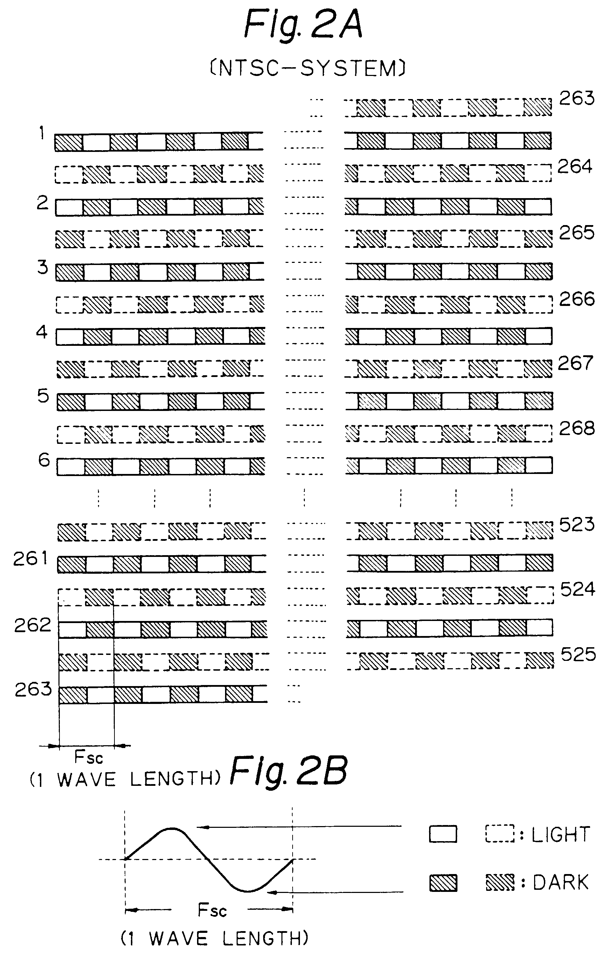

Figures 2A and 2B are diagrams indicatinq an example of a display image based on an NTSC-system employing an interlaced scanning method as shown in Fig. 2A. Further, the display image shown in Fig. 2A is refreshed every two frames (or four fields), and the next frame displayed after the display image (current frame) shown in Fig. 2A is omitted.

As shown in Fig. 2A, in the NTSC-system, a display image (or frame) is constituted by 525 scanning lines and one frame is formed by two fields each constituted by 262.5 scanning lines. Namely, one field is formed by scanning lines numbered from 1 to 263 (first half of the line number 263) in a first 1/60 second, which are indicated by solid lines in Fig. 2A, and the other field is formed by scanning lines numbered from 263 (second half of the line number 263) to 525 in a next 1/60 second, which are indicated by broken lines in Fig. 2A. Note, each of the first and second fields has a duration of 1/60 second, and thus each frame has a duration of 1/30 second. Further, as shown in Fig. 2B, a blank area denotes a light point and a hatched area denotes a dark point, and each area (or each point) corresponds to a half of one wavelength ($F_{SC}$).

As clearly shown in Fig. 2A, in a vertical direction (lengthwise direction), blank areas of a 264th scanning line (scanning line number 264) and a second scanning line (scanning line number 2) are placed between hatched areas of a first scanning line (scanning line number 1) and a 265th scanning line (scanning line number 265), and blank spaces of a 265th scanning line and a third scanning line are placed between hatched areas of the second scanning line and a 266th scanning line. Namely, in the NTSC-system, the phase of the color subcarrier signal (color burst signal) of the two adjacent scanning lines (first and second scanning lines, 264th and 265th scanning lines, and the like) in the same field is different by 180 degrees, and thus blank areas of the two adjacent scanning lines in the same field are inverted to hatched areas, so that unwanted light and darkness variations arising from the chrominance signals can be cancelled and a clear display image can be obtained.

A PAL-system is employed in Asia or Europe (for example, United Kingdom, and Germany) instead of the above described NTSC-system.

This PAL-system has fundamentally the same configuration as the NTSC-system, but in the PAL-system, two chrominance signals are transferred so that a phase of one of the two chrominance signals is inverted by each line.

This phase inversion in the PAL-system is used to correct the change caused by transmission lines, and thus saturation distortion can be considerably reduced.

In the PAL-system, a color subcarrier frequency $F_{SC}$ and a horizontal scanning frequency $F_L$ are determined to satisfy the following equation ②

$$F_{SC} = (n-1/4)\, F_L + F_F$$

$$= F_L\,(((4\times n-1)/4) + (F_F/F_L)) \qquad ②$$

Where,

$F_{SC}$:    frequency of color subcarrier (4.43361875 MHz)
$F_L$ :    horizontal scanning frequency (15.625 kHz)
$F_F$ :    field frequency (50 Hz)
n :    position of color subcarrier in video signal band (for example, n = 248)

Note, in the PAL-system, the ratio ($F_F/F_L$) specified between the field frequency $F_F$ and the horizontal scanning frequency $F_L$ is set to 1/625, and thus the above equation ② is converted to the following equation ③

$$F_{SC} = (((4\times n-1)\times 625+4)/(4\times 625))\times F_L) \qquad ③$$

This equation ③ means that an exact frequency of the color subcarrier can be generated by counting a basic clock [$4\times 625\times F_{SC}$] (Hz) [(($4\times n-1)\times 625+4$)] times. However, in accordance with the above PAL-system, the frequency of the basic clock is extremely high, and thus there are problems of a large number of bits used for the counter and the like and a large circuit scale.

In a previously-proposed system, to solve the above problems, the above equation ③ was replaced by the following approximate equation ④

$$F_{SC}' = ((4\times n-1)/4)\times F_L) \qquad ④$$

By using this approximate equation, the frequency of the basic clock can be reduced to [$4\times F_{SC}$] which is lower by a factor of 625 than the above frequency of the basic clock [$4\times 625\times F_{SC}$] , so that the number of bits used for the counter and the like can be reduced and the circuit scale can be reduced.

However, an error is caused between the frequency $F_{SC}'$ of the color subcarrier obtained by the above approximate equation and the exact frequency $F_{SC}$ of the color subcarrier, so that a change of light and darkness between two adjacent scanning lines may be caused. Therefore, when displaying a display image of a small movement, e.g.

an image of characters, a flicker (which is called dot interference) may be caused. Note, when dot interference is caused, dots located at a contour of the image (character) are moved, and thus the quality of the display image is decreased.

Namely, when the color subcarrier frequency $F_{SC}$ is specified as an exact frequency, the dot interference can be eliminated by using the above described frequency interlace method. However, when using the color subcarrier frequency $F_{SC}'$ obtained by the approximate equation, frequency error cannnot be avoided. Also, the phases of the chrominance signals of the adjacent scanning lines are uniform, so that the above described problems are caused.

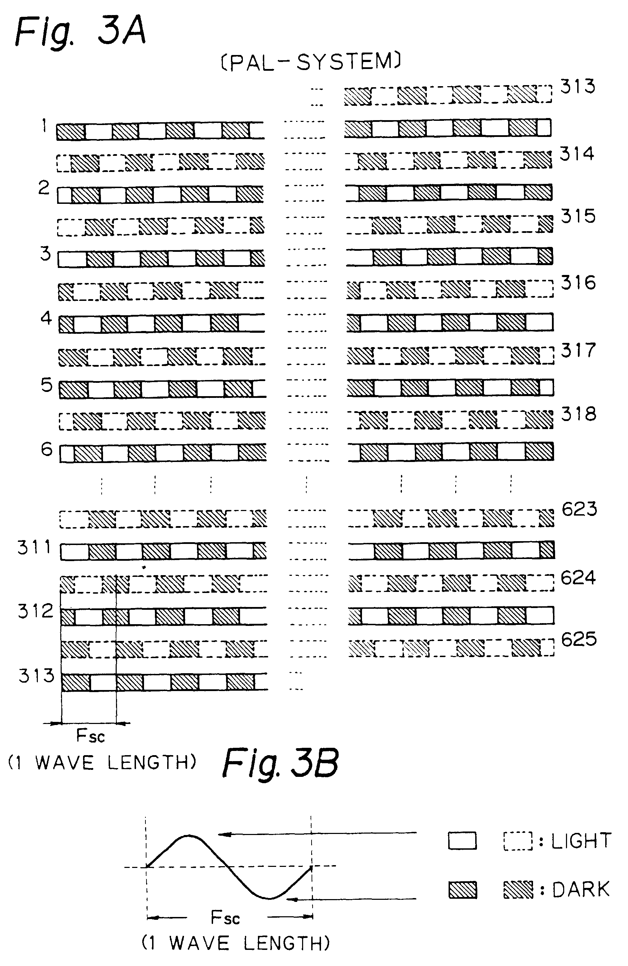

Figures 3A and 3B are diagrams indicating an example of a display image using a previously-considered PAL-system. Note, as shown in Fig. 3A, an interlaced scanning method, is employed, and the display image shown in Fig. 3A is formed by using the above approximate equation④. Further, the display image shown in Fig. 3A is refreshed every four frames (or eight fields), and the following three frames from the display image (current frame) shown in Fig. 3A are omitted.

As shown in Fig. 3A, in the PAL-system, a display image (or frame) is constituted by 625 scanning lines and one frame is formed by two fields each constituted by 312.5 scanning lines. Namely, one field is formed by scanning lines numbered from 1 to 313 ( first half of the line number 313) in a first 1/50 second, which are indicated by solid lines in Fig. 3A, and the other field is formed by scanning lines numbered from 313 ( second half of the line number 313) to 625 in a next 1/50 second, which are described by broken lines in Fig. 3A. Note, each of the first and second fields has a duration of 1/50 second, and thus each frame has a duration of 1/25 second. Further, as shown in Fig. 3B, a blank area denotes a light point and a hatched area denotes a dark point, and each area (or each point) corresponds to a half of one wavelength ($F_{SC}$).

As clearly shown in Fig. 3A, in a vertical direction (lengthwise direction) of the frame, two adjacent blank (hatched) areas of a 314th and a second scanning lines, a 315th and a third scanning lines, a 316th and a fourth scanning lines, and the like are gradually displaced towards the right side in the direction towards the lower side. In the same field, blank (hatched) areas of each scanning line are displaced towards the right side as the scanning-line number increases, due to the delay of 1/4 period ($4F_{SC}$). Namely, in the PAL-system using the above approximate equation④, the phase of the color subcarrier signal (color burst signal) of the two adjacent scanning lines (first and second scanning lines, 314th and 315th scanning lines, and the like) in the same field is different by 90 degrees, and thus blank (hatched) areas of the scanning line in the same field are delayed by 90 degrees (1/4 period). Therefore, stripes appear on the display image, or a flicker (dot interference) is caused, so that the quality of the display image is decreased.

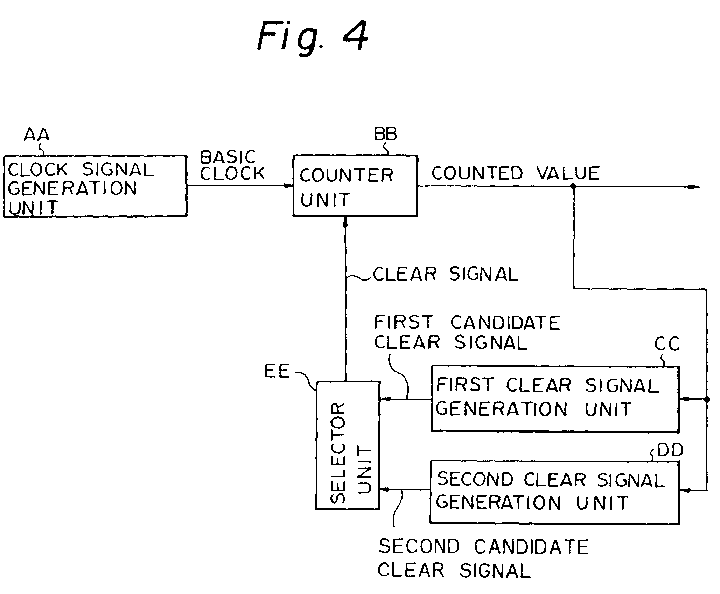

Figure 4 is a block diagram indicating the basic configuration of a device for generating a horizontal synchronizing signal, embodying the aforesaid first aspect of the present invention. As shown in Fig. 4, a system for generating a horizontal synchronizing signal comprises a clock signal generation unit AA, a counter unit BB, a first clear signal generation unit CC, a second clear signal generation unit DD, and a selector unit EE.

The clock generation unit AA is used to generate a basic clock having a frequency specified as any multiple of a color subcarrier frequency, and the counter unit BB is used to count the basic clock until a specific clear signal is input. The first clear signal generation unit CC is used to monitor a value of the counter unit and to generate a first candidate clear signal when the value of the counter unit corresponds to one horizontal scanning period (or one period of the horizontal synchronizing signal). The second clear signal generation unit DD is used to monitor a value of the counter unit and to generate a second candidate clear signal when the value of the counter unit corresponds to a period that is longer, by a half period of the color subcarrier frequency, than the above-mentioned one horizontal scanning period. The selector unit EE is used to select the first candidate clear signal as the specific clear signal normally, but selects the second candidate clear signal as the specific clear signal at least once during a vertical scanning period.

In the device of Fig. 4 a basic clock (for example, $4F_{SC}$) having a frequency specified as any multiple (for example, four times) of a color subcarrier frequency $F_{SC}$ is counted, and the count value is cleared at intervals equal to the horizontal scanning period (horizontal synchronizing signal period) and is also cleared at least once in each vertical scanning period after an interval which is longer by a half period of the color subcarrier frequency than the horizontal scanning period.

Therefore, a length of one vertical scanning period (one field) is set to [horizontal scanning period ($F_L$) × 625 + $\alpha$] ($\alpha$ : a half period of $F_{SC}$), and phases of the chrominance signals in the continuous fields are inverted, so dot interference between the adjacent scanning lines can be eliminated.

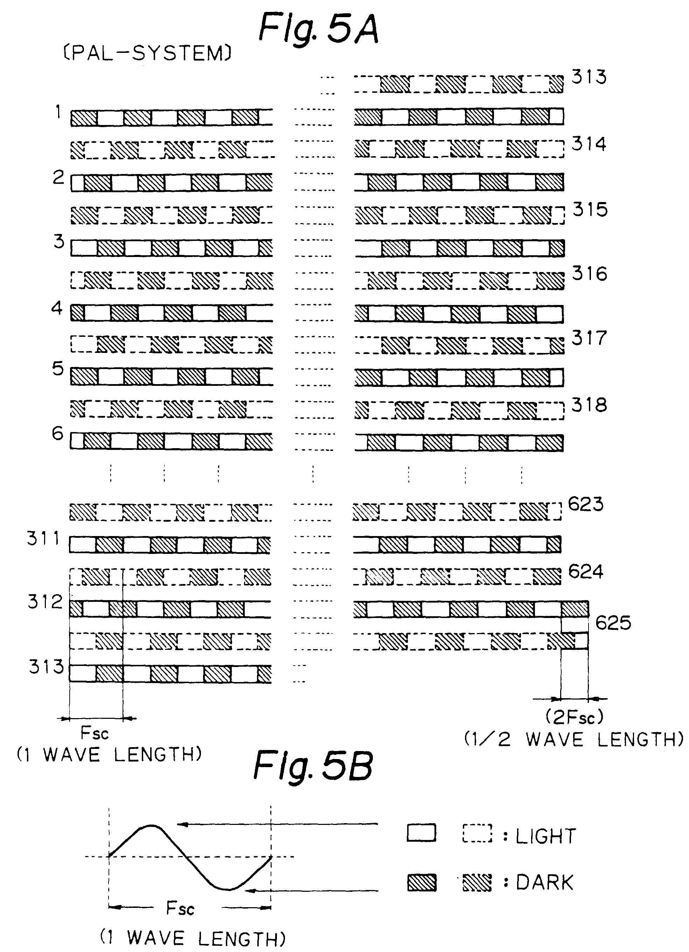

Figures 5A and 5B are diagrams indicating an example of a display image obtained by using the Fig. 4 device for generating a horizontal synchronizing signal in a PAL-system. Note, as shown in Fig. 5A, an interlaced scanning method is employed, and the display image shown in Fig. 5A is formed by using the above approximate equation④ and also using the above described configuration with reference to Fig. 4. Further, the display image shown in Fig. 5A is refreshed every four frames (or eight fields), and the following three frames from the display image (current frame) shown in Fig. 5A are omitted.

As shown in Fig. 5A, in the PAL-system, a display image (or frame) is constituted by 625 scanning lines and one frame is formed by two fields each constituted by 312.5 scanning lines. Namely, one field is formed by scanning lines numbered fran 1 to 313 (first half of the line number 313) in a first 1/50 second, which are indicated by solid lines in Fig. 5A, and the other field is formed by scanning lines numbered fran 313 (second half of the line number 313) to 625 in a next 1/50 second, which are indicated by broken lines in Fig. 5A. Note, each of the first and second fields has a duration of 1/50 second, and thus each frame has a duration of 1/25 second. Further, as shown in Fig. 5B, a blank area denotes a light point and a hatched area denotes a dark point, and each area (or each point) corresponds to a half of one wavelength ($F_{SC}$).

Note, in the display image (or frame) shown in Fig. 5A, each of the scanning lines 312 and 625 located at the lower side of the display image includes an additional area corresponding to $2F_{SC}$, or 1/2 wave length, so that stripes do not appear on the display image, or a flicker (dot interference) is not caused.

Concretely, as clearly shown in Fig. 5A, in a vertical direction (lengthwise direction) of the frame, blank (hatched) areas of a first scanning line appear on a 315th scanning line, a fifth scanning line, and the like; blank (hatched) areas of a 314th scanning line appear on a fourth scanning line, a 318th scanning line, and the like; and blank (hatched) areas of a second scanning line appear on a 316th scanning line, a sixth scanning line, and the like. Namely, in the same field, blank (hatched) areas of each scanning line appear every four scanning lines, whose relationships are the same as that shown in Fig. 3A. Nevertheless, in the same frame, the phase of the color subcarrier signal (color burst signal) of all of the two adjacent scanning lines (first and 314th scanning lines, 314th and second scanning lines, and the like) is different by 90 degrees, and thus blank (hatched) areas of the scanning line in the same field are delayed or advanced by 90 degrees (1/4 period). Therefore, stripes do not appear on the display image, or a flicker (dot interference) is not caused, so that the dot interference is avoided in a simple manner and without unduly increasing the circuit scale.

As described above with reference to Fig. 5A, each of the scanning lines 312 and 625 located at the lower side of the display image includes an additional area corresponding to $2F_{SC}$, but the additional area corresponding to $2F_{SC}$ (or 1/2 wave length) is not limited to the 312th and 625th scanning lines. Nevertheless, in each field, the additional area is preferably provided for the end portion of the scanning line close to the upper or lower sides. Concretely, the additional area corresponding to $2F_{SC}$ (or 1/2 wave length) can be provided for the 311th and 624th scanning lines, 624th and 312th scanning lines, 313th and first scanning lines, or first and 314th scanning lines. Further, the additional area is not only limited to the area corresponding to $2F_{SC}$ (or 1/2 wave length), but also the additional area can be specified as odd multiples of $2F_{SC}$ (or 1/2 wave length), e.g., 3/2 wave length, or 5/2 wave length.

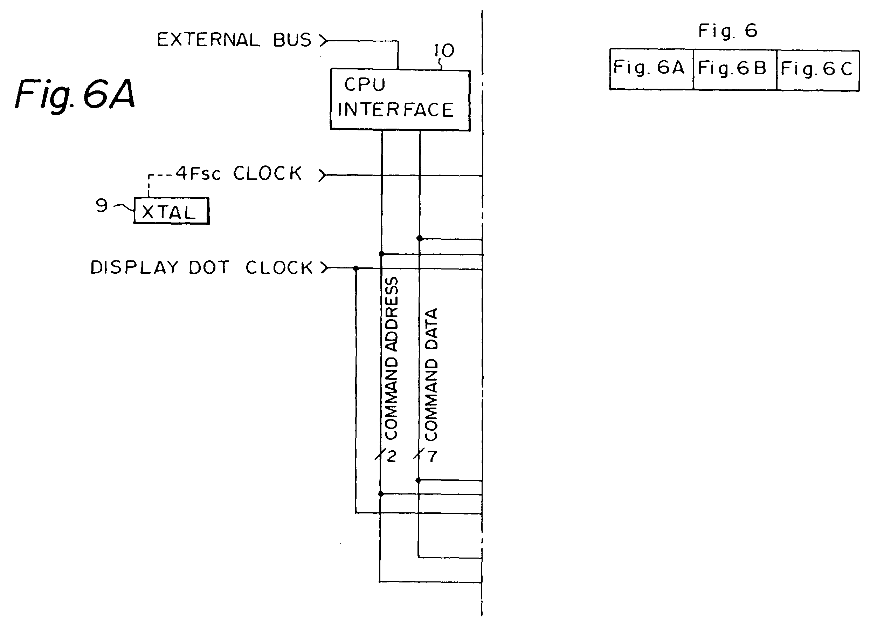

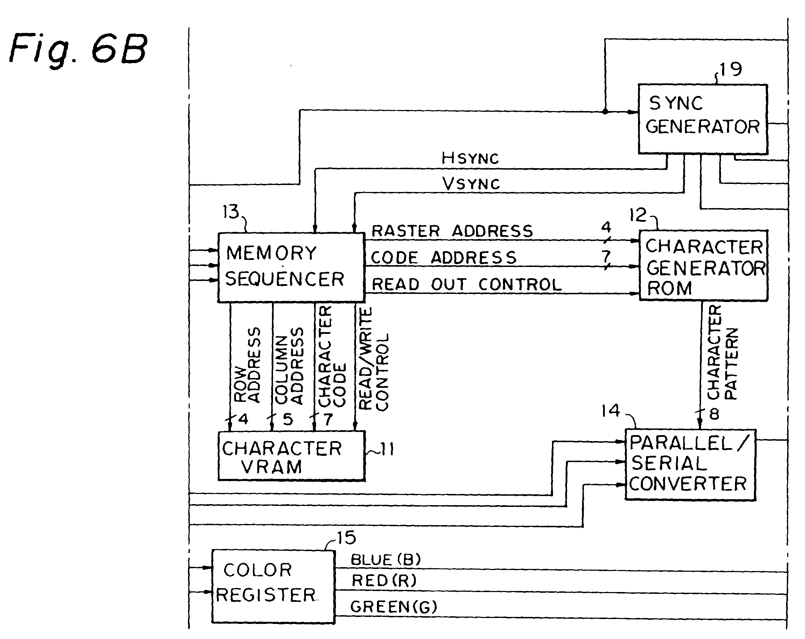

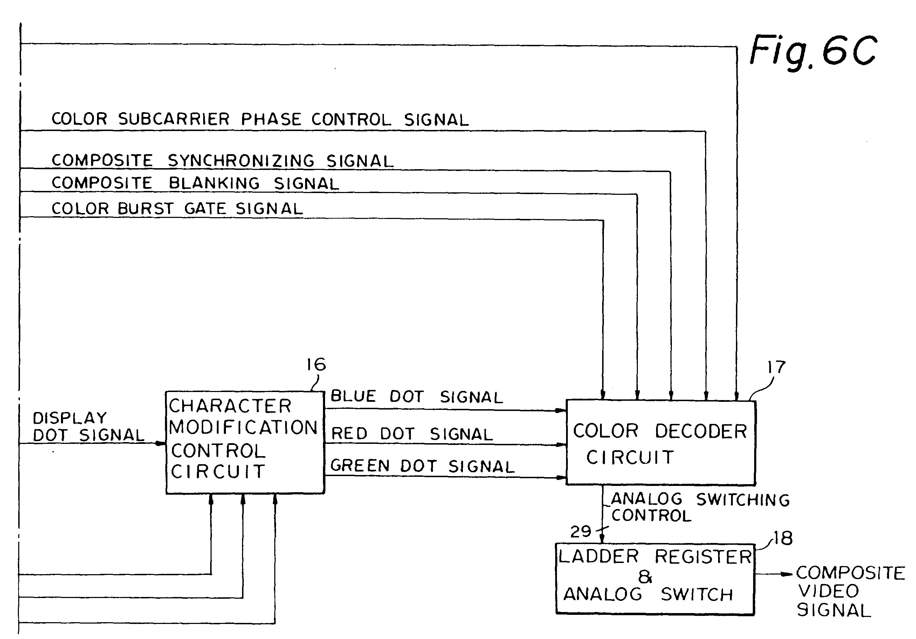

Figure 6 is a block diagram of a video signal generation device (or OSDC: on screen display controller) wich comprises a CPU interface 10, a memory sequencer 13, a parallel/serial converter 14, a character modification control circuit 16, a color decoder circuit 17, a ladder register and analog switch 18, and a SYNC generator 19.

The CPU interface 10 is used to connect the video signal generation device to a computer (CPU) through an external bus. The memory sequencer 13 is used to control various memory portions (for example, a character video RAM 11 or a character generator ROM 12) by receiving command data, command addresses, a display dot clock, a horizontal synchronizing signal ($H_{SYNC}$), and a vertical synchronizing signal ($V_{SYNC}$). The parallel/serial converter 14 is used to convert a character pattern read out from the character generator ROM 12 into a serial sequence in accordance with the command data, the command addresses, and the display dot clock.

The character modification control circuit 16 is used to generate red, blue, and green dot signals by adding color information output from a color register 15 to the serial-converted display dot signal. The color decoder circuit 17 is used to decode the red, blue and green dot signals in accordance with various timing signals of a basic clock signal ($4F_{SC}$), a color subcarrier phase control signal, a composite synchronizing signal, a composite blanking signal, a color burst gate signal, and the like. The ladder register and analog switch 18 is used to generate an analog composite video signal in accordance with an output of the color decoder circuit 17. The SYNC generator 19 is used to generate the above described horizontal synchronizing signal ($H_{SYNC}$), the vertical synchronizing signal ($V_{SYNC}$), and various timing signals.

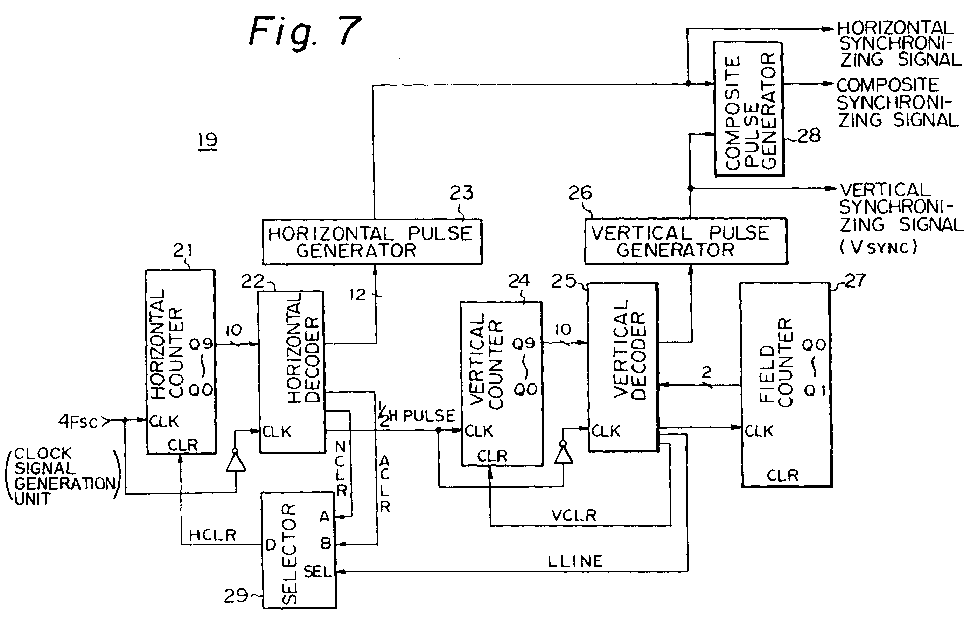

Figure 7 is a block diagram indicating an example of the SYNC generator shown in Fig. 6. As shown in Fig. 7, the SYNC generator 19 comprises a horizontal counter 21, a horizontal decoder 22, a horizontal pulse generator 23, a vertical counter 24, a vertical decoder 25, a vertical pulse generator 26, a field counter 27, a composite pulse generator 28, and a selector 29.

The horizontal counter 21 is constituted by a 10-bit counter for counting the basic clock ($4F_{SC}$) from 0 to 1134 (or 0 to 1136) corresponding to one horizontal scanning period (which may be called 1H) in the PAL-system while synchronizing a trailing edge of the basic clock. The horizontal decoder 22 is used to decode an output of the horizontal counter 21 and to generate various horizontal timing signals. The horizontal pulse generator 23 is used to generate various horizontal pulse signals in accordance with an output of the horizontal decoder 22.

The vertical counter 24 is constituted by a 10-bit counter for counting 1/2H pulses of the horizontal decoder 22 from 0 to 624 corresponding to one vertical scanning period (which may be called 1V) in the PAL-system while synchronizing a trailing edge of the 1/2H pulse. The vertical decoder 25 is used to decode an output of the vertical counter 24 and to generate various vertical timing signals. The vertical pulse generator 26 is used to generate various vertical pulse signals in accordance with an output of the vertical decoder 25.

The field counter 27 is constituted by a 2-bit counter for counting 1V pulses of the vertical decoder 25 from 0 to 3 corresponding to two frame periods in the PAL-system and to generate a signal to control the phase of a vertical color burst blanking period. The composite pulse generator 28 is used to generate a composite pulse signal in accordance with outputs of the horizontal pulse generator 23 and the vertical pulse generator 26 and the selector 29.

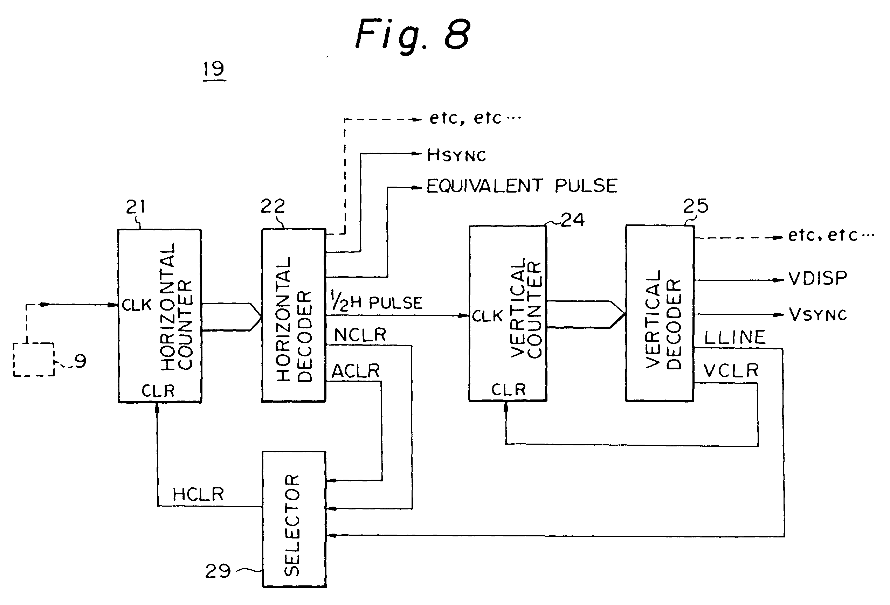

Figure 8 is a block diagram of parts of the SYNC generator shown in Fig. 7. As shown in Fig. 8, the SYNC generator 19 comprises a horizontal counter 21, a horizontal decoder 22, a vertical counter 24, a vertical decoder 25, and a selector 29.

As shown in Fig. 8, in the horizontal counter 21, two kinds of horizontal scanning periods are counted, of which one is a normal horizontal scanning period ($1H_{NORMAL}$) having a length of $[4F_{SC} \times 1135]$ produced by counting the basic clock ($4F_{SC}$) from 0 to 1134, and the other is a long horizontal scanning period ($1H_{LONG}$) having a length longer by $[4F_{SC} \times 2]$ than the normal horizontal scanning period $1H_{NORMAL}$. Namely, the long horizontal scanning period $1H_{LONG}$ having a length of $[4F_{SC} \times 1137]$ is produced by counting the basic clock ($4F_{SC}$) from 0 to 1136. Note, the additional $[4F_{SC} \times 2]$ in the long horizontal scanning period $1H_{LONG}$ corresponds to the additional areas located at the end portion of each of the 312th and 625th scanning lines shown in Fig. 5A. Further, in this embodiment the long horizontal scanning period $1H_{LONG}$ is included only once (one time) in each vertical scanning period IV (i.e. in each field). Note, in Figs. 7 and 8, the horizontal counter 21 corresponds to the counter unit BB, the horizontal decoder 22 corresponds to first and second clear signal generation units CC and DD, and the selector 29 corresponds to selector unit EE in Fig. 4. Further, in Fig. 8, a crystal oscillator 9 corresponds to the clock signal generation unit AA.

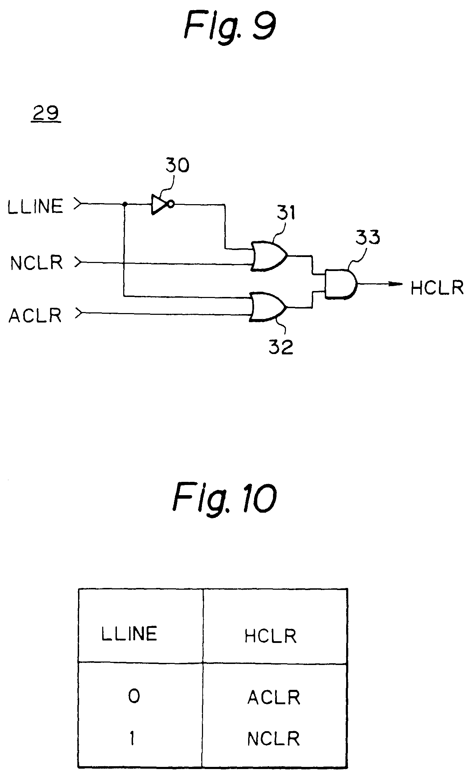

Figure 9 is a circuit diagram indicating an example of the ladder register and analog switch *shown* in Fig. 6, and Fig. 10 is a diagram indicating truth values of the ladder register and analog switch shown in Fig. 9.

As shown in Fig. 9, the selector 29 comprises an inverter 30, OR gates 31, 32, and an AND gate 33, wherein one of the two clear signals (NCLR, ACLR) output from the horizontal decoder 22 is selected and determined as a clear signal (HCLR) of the horizontal counter 21.

In the selector 29, when a selection control signal (LLINE), which is output once fran the vertical decoder 25 during one vertical scanning period, is in a nonactive state ("1"), one clear signal NCLR for the normal horizontal scanning period $1H_{NORMAL}$ is selected. Conversely, in the selector 29, when the selection control signal LLINE is in an active state ("0"), the other clear signal ACLR for the long horizontal scanning period $1H_{LONG}$ is selected. Namely, the clear signal ACLR is only selected once during one vertical scanning period (or one field).

Note, these clear signals NCLR and ACLR are output from the horizontal decoder 22 through the horizontal counter 21, and the horizontal counter 21 counts the basic clock ($4F_{SC}$) from 0 to 1134 (1135 times) or 0 to 1136 (1137 times). Namely, the clear signal NCLR corresponds to the normal horizontal scanning period $1H_{NORMAL}$ having a length of $[4F_{SC} \times 1135]$, and the clear signal ACLR corresponds to the long horizontal scanning period $1H_{LONG}$ having a length of $[4F_{SC} \times 1137]$.

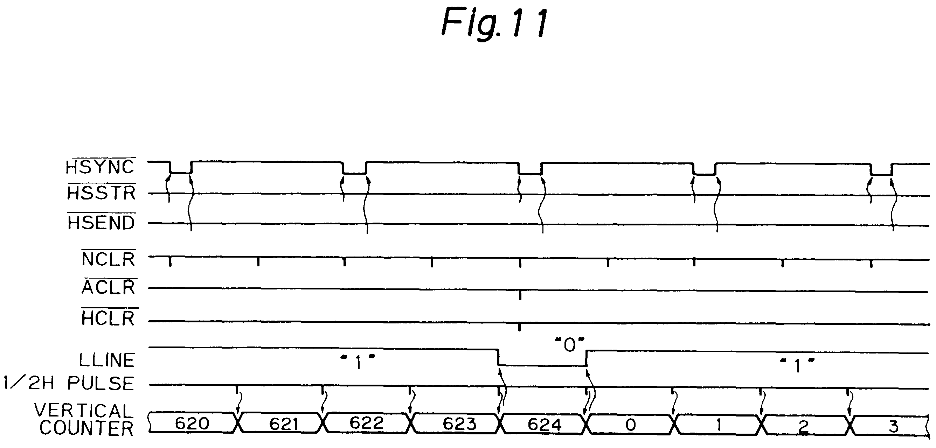

Figures 11 to 13 are diagrams indicating operational waveforms of a device, for generating the horizontal synchronizing signal, embodying the present invention.

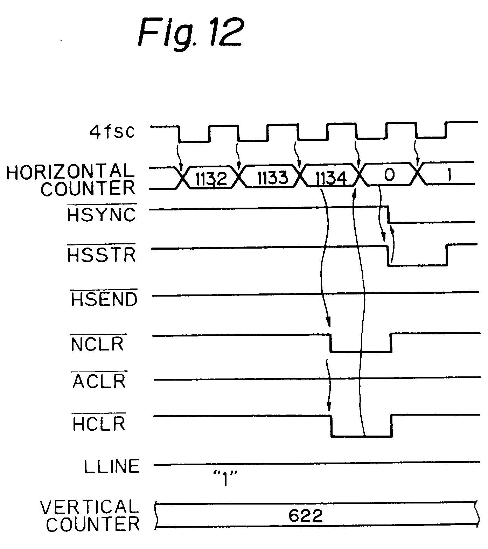

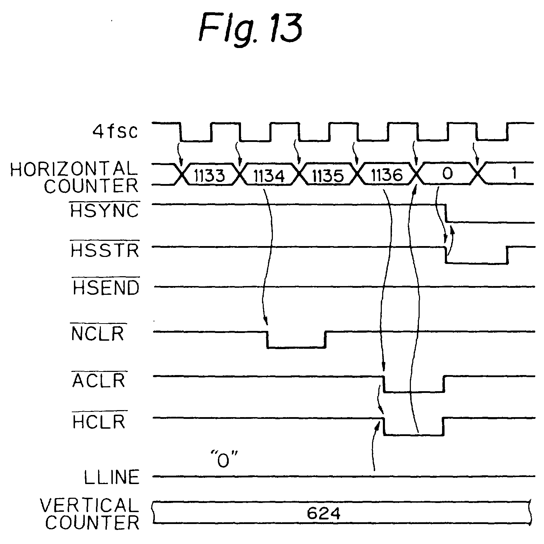

As shown in Fig. 11, when the selection control signal LLINE is specified at "1", i.e. when the count value of the vertical counter 24 is specified from 0 to 623 corresponding to the scanning lines 1 to 624 shown in Fig. 5A, the horizontal counter 21 is cleared at the timing of one clear signal NCLR, and the counter value of the horizontal counter 21 is changed progressively fran 0 to 1134 (1135 times) corresponding to the normal horizontal scanning period $1H_{NORMAL}$ whose length is defined as $[4F_{SC} \times 1135]$ (with reference to Fig. 12). Conversely, as shown in Fig. 11, when the selection control signal LLINE is specified at "0", i.e. when the count value of the vertical counter 24 is specified at 624 corresponding to the scanning line 625 shown in Fig. 5A, the horizontal counter 21 is cleared at the timing of the other clear signal ACLR, and the counter value of the horizontal counter 21 is changed progressively from 0 to 1136 (1137 times) corresponding to the long horizontal scanning period $1H_{LONG}$ whose length is defined as $[4F_{SC} \times 1137]$ (with reference to Fig. 13). Note, a difference [2] of the counter value of the horizontal counter 21, which means $4F_{SC} \times 2$, corresponds to $F_{SC} \times (1/2)$.

Namely, the horizontal counter 21 of Fig. 7 normally operates as a 1135-counter, but the horizontal counter 21 operates as a 1137-counter once during one vertical scanning period 1V. Therefore, one horizontal scanning period of operating as the 1135-counter can be determined as $[F_{SC} \times 1/2 \times I]$ (where I is an integral number), and a horizontal scanning signal which is longer by a half period of the color subcarrier frequency than the normal horizontal scanning signal, can be inserted once into each vertical scanning period 1V.

Consequently, by using the above described approximate equation ④ where the basic clock is chosen as $4F_{SC}$, only one horizontal scanning period per field can be made longer by a half period of $F_{SC}$ than the normal horizontal scanning period, simply by adding the counter 29 (i.e. without increasing the circuit scale significantly), so that phases of the chrominance signals in the continuous fields are inverted and a dot interference between the adjacent scanning lines can be eliminated.

Therefore, stripes do not appear on the display image, or a flicker (dot interference) is not caused, so that the dot interference is avoided by an easy improvement without increasing the circuit scale.

In the above described embodiments, each of the scanning lines (312th and 625th scanning lines shown in Fig. 5A) located at the lower side of the display image includes an additional area corresponding to $2F_{SC}$, but the additional area corresponding to $2F_{SC}$ (or 1/2 wave length) is not limited to the 312th and 625th scanning lines. Nevertheless, in each field, the additional area is preferably provided for the end portion of the scanning line close to the upper or lower sides. Further, the additional area is not limited to the area corresponding to $2F_{SC}$ (or 1/2 wave length), but also the additional area can be specified as odd multiples of $2F_{SC}$ (or 1/2 wave length), e.g., 3/2 wave length, or 5/2 wave length. Namely, the horizontal counter 21 is not limited to be operated as a 1135-counter or 1137-counter, but the horizontal counter 21 can be constituted as a 1135-counter or 1141-counter, or a 1135-counter or 1145-counter. In addition, the horizontal counter 21 can be determined to operate as any number counter so that phases of the chrominance signals in the continuous fields can be inverted. Furthermore, although in the above-described embodiment, the 1137-counter operates just once during one vertical scanning period IV, the operational frequency thereof is not limited to once per vertical scanning period 1V; more than once per vertical scanning period 1V is possible.

Many widely differing embodiments of the present invention may be constructed without departing from the scope of the claims.

## Claims

1. A device for generating a horizontal synchronizing signal for use in a PAL-type television system, including:

    clock generation means (AA; 9) for generating a basic clock signal having a frequency ($4F_{SC}$) that is a preselected multiple of the frequency ($F_{SC}$) of a color subcarrier signal of the PAL-type television system; and
    frequency divider means (BB, CC, DD, EE; 21, 22, 29) connected with the said clock generating means (AA; 9) and operable, over the course of a vertical scanning period (1V) of the PAL-type television system, to perform a series of division cycles including first division cycles of duration equal to a normal horizontal scanning period ($1H_{NORMAL}$) of the PAL-type television system, in which first division cycles the basic-clock-signal frequency ($4F_{SC}$) is divided by a first division factor (1135), and also including at least one second division cycle of duration greater than the said normal horizontal scanning period, in which second division cycle the said basic-clock-signal frequency is divided by a second division factor (1137) greater than the said first division factor;

    characterised in that the said frequency divider means include:

    counter means (BB; 21) connected to the said clock generating means (AA; 9) for counting pulses of the said basic clock signal and for providing a count value representing the number of pulses counted;
    first clear signal generation means (CC; 22) connected to the said counter means (BB; 21) for monitoring the said count value provided by the counter means and for generating a first candidate clear signal (NCLR) when the monitored count value reaches a first value (1135) that corresponds to said normal horizontal scanning period ($1H_{NORMAL}$);
    second clear signal generation means (DD; 22) connected to the said counter means (BB; 21) for monitoring the said count value provided by the counter means and for generating a second candidate clear signal (ACLR) when the monitored count value reaches a second value (1137; 1141; 1145) that corresponds to a prolonged horizontal scanning period ($1H_{LONG}$) that is longer than the said normal horizontal scanning period by an odd multiple of a half-period of the said color subcarrier signal; and
    selector means (EE; 29), connected to the said first and second clear signal generation means (CC, DD; 22) and the said counter means (BB; 21), for selecting the said first candidate clear signal (NCLR) in each said first division cycle of said series and for selecting the said second candidate clear signal (ACLR) in the or each said second division cycle of the said series, the clear signal (NCLR/ACLR) selected in each division cycle being applied to the said counter means (BB; 21) to reset the said count value provided thereby.

2. A device as claimed in claim 1, wherein the relationship between the color subcarrier frequency $F_{SC}$ and a horizontal frequency $F_L$ of the PAL-type television system is expressed by the approximate equation:

$$F_{SC} = ((4 \times n - 1)/4) \times F_L$$

where n denotes the position of the color subcarrier signal in a video signal band.

3. A device as claimed in claim 1 or 2, wherein said frequency of said basic clock signal ($4F_{SC}$) is preselected to be four times the color subcarrier frequency ($F_{SC}$).

4. A device as claimed in any one of the preceding claims, wherein said second clear signal generation means (DD) generates the second candidate clear signal (ACLR) when the said count value of said counter means corresponds to a period that is longer by one half-period ($2F_{SC}$) of the color subcarrier frequency ($F_{SC}$) than the said normal horizontal scanning period ($1H_{NORMAL}$).

5. A device as claimed in claim 4, wherein said first clear signal generation means (CC) are constituted by a 1135-counter, and said second clear signal generation means (DD) are constituted by a 1137-counter.

6. A device as claimed in any one of the preceding claims, wherein the or each said second division cycle, in which the second candidate clear signal (ACLR) is selected, corresponds to a scanning line located on the upper or lower side of each field.

7. A device as claimed in claim 6, wherein the said second division cycle, or one of the second division cycles if more than one, in which the second candidate clear signal (ACLR) is selected, corresponds to the 312th or 625th scanning line of each field.

8. Video signal generation circuitry including a device for generating a horizontal synchronizing signal as claimed in any one of the preceding claims.

9. Circuitry as claimed in claim 8, wherein the said device is included in a SYNC generator (19) of the circuitry which serves to generate such a horizontal synchronizing signal ($H_{sync}$), a vertical synchronizing signal ($V_{sync}$), and various further timing signals in accordance with the said basic clock signal ($4F_{SC}$);
the circuitry further including:

a memory sequencer (13), connected for receiving command data, command addresses, and a display dot clock, and also connected to the SYNC generator for receiving said horizontal synchronizing signal ($H_{sync}$) and said vertical synchronizing signal ($V_{sync}$), and operable to control various memory portions (11, 12) of the circuitry; and
a color decoder circuit (17), operatively connected to said memory sequencer (13), for decoding red, blue, and green dot signals of a specific display image in accordance with the various timing signals output from said SYNC generator (19).

10. Circuitry as claimed in claim 9, wherein said SYNC generator (19) comprises:

a horizontal counter (21), serving as the said counter means, and connected to said clock generation means (9) for counting the pulses of said basic clock signal ($4F_{SC}$) and for providing said count value;
a horizontal decoder (22), serving as the said first and second clear signal generation means, and connected to said horizontal counter (21) for monitoring the count value provided by said horizontal counter (21) and generating such first candidate clear signals (NCLR) and such second candidate clear signals (ACLR), such a second candidate clear signal (ACLR) being output after a period ($1H_{LONG}$) that is longer by a half period of the color subcarrier frequency ($F_{SC}$) than the said normal horizontal scanning period ($1H_{NORNAL}$); and
a selector (29), serving as the said selector means, and connected to said horizontal decoder (22) for selecting either the first candidate clear signal (NCLR) or the second candidate clear signal (ACLR), the second candidate clear signal (ACLR) being selected at least once during each said vertical scanning period (1V).

11. An on-screen display controller device (OSCD) including circuitry as claimed in any one of claims 8 to 10.

**Patentansprüche**

1. Vorrichtung zum Erzeugen eines Horizontalsynchronisiersignals für die Verwendung in einem PAL-Fernsehsystem, welche enthält:

eine Taktgeneratoreinrichtung (AA; 9) zum Erzeugen eines Grundtaktsignals mit einer Frequenz ($4F_{SC}$), die aus einem vorgewählten Vielfachen der Frequenz ($F_{SC}$) eines Farb-Subträger-Signals des PAL-Fernsehsystems besteht; und

eine Frequenz-Teilereinrichtung (BB, CC, DD, EE; 21, 22, 29), die mit der Taktgeneratoreinrichtung (AA; 9) verbunden ist und die über den Verlauf einer vertikalen Abtastperiode (1V) des PAL-Fernsehsystems betreibbar ist, um eine Serie von Teilungszyklen durchzuführen, die erste Teilungszyklen einer Dauer enthalten, welche gleich ist einer normalen Horizontalabtastperiode ($1H_{NORMAL}$) des PAL-Fernsehsystems, in welchen ersten Teilungszyklen die Grundtaktsignalfrequenz ($4F_{SC}$) durch einen ersten Teilungsfaktor (1135) geteilt wird, und die auch wenigstens einen zweiten Teilungszyklus einer Dauer enthalten, die größer ist als die normale Horizontalabtastperiode, in welchem zweiten Teilungszyklus die Grundtaktsignalfrequenz durch einen zweiten Teilungsfaktor (1137) geteilt wird, der größer ist als der erste Teilungsfaktor;

dadurch gekennzeichnet, daß die Frequenz-Teilereinrichtung enthält:

eine Zählereinrichtung (BB; 21), die an die Taktgeneratoreinrichtung (AA; 9) angeschlossen ist, um Impulse des Grundtaktsignals zu zählen und um einen Zählwert zu liefern, der die Zahl der gezählten Impulse wiedergibt;

eine erste Löschsignalgeneratoreinrichtung (CC; 22), die an die Zählereinrichtung (BB; 21) angeschlossen ist, um den Zählwert, der durch die Zählereinrichtung erzeugt wurde, zu überwachen und um ein erstes Kandidatlöschsignal (NCLR) zu erzeugen, wenn der überwachte Zählwert einen ersten Wert (1135) erreicht, welcher der normalen Horizontalabtastperiode ($1H_{NORMAL}$) entspricht;

eine zweite Löschsignalgeneratoreinrichtung (DD; 22), die mit der Zählereinrichtung (BB; 21) verbunden ist, um den Zählwert, der durch die Zählereinrichtung erzeugt wurde, zu überwachen und um ein zweites Kandidatlöschsignal (ACLR) zu erzeugen, wenn der überwachte Zählwert einen zweiten Wert (1137; 1141; 1145) erreicht, der einer verlängerten horizontalen Abtastperiode ($1H_{LONG}$) entspricht, die länger ist als die normale horizontale Abtastperiode, und zwar um ein ungeradzahliges Vielfaches einer halben Periode des Farb-Subträger-Signals; und

eine Wählvorrichtung (EE; 29), die an die erste und die zweite Löschsignalgeneratoreinrichtung (CC, DD; 22) und die Zählereinrichtung (BB; 21) angeschlossen ist, um das erste Kandidatlöschsignal (NCLR) in jedem ersten Teilungszyklus der genannten Serie auszuwählen und um das zweite Kandidatlöschsignal (ACLR) in dem oder in jedem zweiten Teilungszyklus der genannten Serie auszuwählen, wobei das in jedem Teilungszyklus ausgewählte Löschsignal (NCLR/ACLR) an die Zählereinrichtung (BB; 21) angelegt wird, um den Zählwert, der durch diese erzeugt wurde, zurückzustellen.

2.  Vorrichtung nach Anspruch 1, bei der die Beziehung zwischen der Farb-Subträger-Frequenz $F_{SC}$ und einer Horizontalfrequenz $F_L$ des PAL-Fernsehsystems durch die folgende Annäherungsgleichung ausgedrückt wird:

$$F_{SC} = ((4 \times n - 1)/4) \times F_L,$$

worin n die Position des Farb-Subträger-Signals in einem Videosignalband bezeichnet.

3.  Vorrichtung nach Anspruch 1 oder 2, bei der die Frequenz des Grundtaktsignals ($4F_{SC}$) so vorgewählt ist, daß sie das vierfache der Farb-Subträger-Frequenz ($F_{SC}$) beträgt.

4.  Vorrichtung nach irgendeinem der vorhergehenden Ansprüche, bei der die zweite Löschsignalgeneratoreinrichtung (DD) das zweite Kandidatlöschsignal (ACLR) erzeugt, wenn der Zählwert der Zählereinrichtung einer Periode entspricht, die um eine halbe Periode ($2F_{SC}$) der Farb-Subträger-Frequenz ($F_{SC}$) länger ist als die normale Horizontalabtastperiode ($1H_{NORMAL}$).

5.  Vorrichtung nach Anspruch 4, bei der die ersten Löschsignalgeneratoreinrichtungen (CC) durch einen 1135-Zähler gebildet sind und bei der die zweiten Löschsignalgeneratoreinrichtungen (DD) durch einen 1137-Zähler gebildet sind.

6.  Vorrichtung nach irgendeinem der vorhergehenden Ansprüche, bei der der oder jeder zweite Teilungszyklus, in welchem das zweite Kandidatlöschsignal (ACLR) ausgewählt wird, einer Abtastzeile entspricht, die an der oberen oder der unteren Seite von jedem Halbbild gelegen ist.

7.  Vorrichtung nach Anspruch 6, bei der der zweite Teilungszyklus oder einer der zweiten Teilungszyklen, wenn mehr als einer vorhanden ist, in welchem das zweite Kandidatlöschsignal (ACLR) ausgewählt wird, der 312-ten oder 625-ten Abtastzeile von jedem Halbbild entspricht.

**8.** Vidoesignalgeneratorschaltungsanordnung, enthaltend eine Vorrichtung zum Erzeugen eines Horizontalsynchronisiersignals nach irgendeinem der vorhergehenden Ansprüche.

**9.** Schaltungsanordnung nach Anspruch 8, bei der die Vorrichtung in einem SYNC-Generator (19) der Schaltungsanordnung enthalten ist, die dazu dient, solch ein Horizontalsynchronisiersignal ($H_{sync}$), ein vertikales Synchronisiersignal ($V_{sync}$) und verschiedene weitere Zeitsteuersignale in Einklang mit dem Grundtaktsignal ($4F_{SC}$) zu erzeugen;

wobei die Schaltungsanordnung ferner folgendes enthält:

einen Speichersequenzer (13), der so geschaltet ist, um Befehlsdaten, Befehlsadressen und einen Anzeigepunkttakt zu empfangen und der auch an den SYNC-Generator angeschlossen ist, um das Horizontalsynchronisiersignal ($H_{sync}$) und das Vertikalsynchronisiersignal ($V_{sync}$) zu empfangen, und der so betreibbar ist, um verschiedene Speicherabschnitte (11, 12) der Schaltungsanordnung zu steuern; und
eine Farbdekodierschaltung (17), die betriebsmäßig mit dem Speichersequenzer (13) verbunden ist, um Rot-, Blau- und Grün-Punktsignale eines spezifischen Anzeigebildes in Einklang mit den verschiedenen Zeitsteuersignalen, die von dem SYNC-Generator (19) ausgegeben werden, zu dekodieren.

**10.** Schaltungsanordnung nach Anspruch 9, in der der SYNC-Generator (19) folgendes aufweist:

einen Horizontalzähler (21), der als die genannte Zählereinrichtung dient und der mit der Taktgeneratoreinrichtung (9) verbunden ist, um die Impulse des Grundtaktsignals ($4F_{SC}$) zu zählen und um den Zählwert zu liefern;
einen Horizontaldekodierer (22), der als die erste und die zweite Löschsignalgeneratoreinrichtung dient und der mit dem Horizontalzähler (21) verbunden ist, um den Zählwert zu überwachen, der durch den Horizontalzähler (21) geliefert wird und um solche ersten Kandidatlöschsignale (NCLR) und solche zweiten Kandidatlöschsignale (ACLR) zu erzeugen, wobei solch ein zweites Kandidatlöschsignal (ACLR) nach einer Periode ($1H_{LONG}$) ausgegeben wird, die um eine halbe Periode der Farb-Subträger-Frequenz ($F_{SC}$) länger ist als die normale Horizontalabtastperiode ($1H_{NORMAL}$); und
eine Wählvorrichtung (29), die als die Wähleinrichtung dient und die mit dem Horizontaldekodierer (22) verbunden ist, um entweder das erste Kandidatlöschsignal (NCLR) oder das zweite Kandidatlöschsignal (ACLR) auszuwählen, wobei das zweite Kandidatlöschsignal (ACLR) wenigstens einmal während jeder Vertikalabtastperiode (1V) ausgewählt wird.

**11.** On-Screen-Anzeige-Kontrollervorrichtung (OSCD), welche die Schaltungsanordnung nach irgendeinem der Ansprüche 8 bis 10 enthält.

**Revendications**

**1.** Dispositif pour générer un signal de synchronisation horizontale à utiliser dans un système de télévision de type PAL, comprenant :

un moyen de génération d'horloge (AA ; 9) pour générer un signal d'horloge fondamentale ayant une fréquence ($4F_{SC}$) qui est un multiple présélectionné de la fréquence ($F_{SC}$) d'un signal de sous-porteuse de couleur d'un système de télévision de type PAL ; et
un moyen de diviseur de fréquence (BB, CC, DD, EE ; 21, 22, 29) raccordé audit moyen de génération d'horloge (AA ; 9) et utilisable, au cours d'une période de balayage vertical (1V) du système de télévision de type PAL, pour réaliser une série de cycles de division comprenant des premiers cycles de division d'une durée égale à une période de balayage horizontal normale ($1H_{NORMAL}$) du système de télévision de type PAL, dans lequel un premier cycle de division de la fréquence de signal d'horloge fondamentale ($4F_{SC}$) est divisé par un premier secteur de division (1135), et comprenant aussi au moins un second cycle de division d'une durée plus grande que ladite période de balayage horizontal normale, dans lequel un second cycle de division de ladite fréquence de signal d'horloge fondamentale est divisé par un second facteur de division (1137) plus grand que ledit premier facteur de division ;

caractérisé en ce que ledit moyen de diviseur de fréquence comprend :

un moyen de compteur (BB ; 21) raccordé audit moyen de génération d'horloge (AA ; 9) pour compter des impulsions dudit signal d'horloge fondamentale et pour fournir une valeur de comptage représentant le nombre d'impulsions comptées ;

un premier moyen de génération de signal d'effacement (CC ; 22) raccordé audit moyen de compteur (BB ; 21) pour contrôler ladite valeur de comptage fournie par le moyen de compteur et pour générer un premier signal d'effacement de candidat (NCLR) lorsque la valeur de comptage contrôlée atteint une première valeur (1135) qui correspond à ladite période de balayage horizontal normale ($1H_{NORMAL}$) ;

un second moyen de génération de signal d'effacement (DD ; 22) raccordé audit premier moyen de compteur (BB ; 21) pour contrôler ladite valeur de comptage fournie par le moyen de compteur et pour générer un second signal d'effacement de candidat (ACLR) lorsque la valeur de comptage contrôlée atteint une seconde valeur (1137 ; 1141 ; 1145) qui correspond à une période de balayage horizontal prolongée ($1H_{LONG}$) qui est plus longue que ladite période de balayage horizontal normale d'un multiple impair d'une demi-période dudit signal de sous-porteuse de couleur ; et

un moyen de sélecteur (EE ; 29), raccordé audit premier et second moyens de génération de signal d'effacement (CC, DD ; 22) et audit moyen de compteur (BB ; 21), pour sélectionner ledit premier signal d'effacement de candidat (NCLR) dans chacun dudit premier cycle de division de ladite série et pour sélectionner ledit second signal d'effacement de candidat (ACLR) dans le ou chacun dudit second cycle de division de ladite série, le signal d'effacement (NCLR/ACLR) sélectionné dans chaque cycle de division étant appliqué audit moyen de compteur (BB ; 21) pour initialiser ladite valeur de comptage fournie par celui-ci.

2. Dispositif selon la revendication 1, dans lequel la relation entre la fréquence de sous-porteuse couloir $F_{SC}$ et une fréquence horizontale $F_L$ du système de télévision du type PAL est exprimée par l'équation approchée :

$$F_{SC} = ( (4 * n - 1) / 4 ) \times F_L$$

où n indique la position du signal de sous-porteuse couleur dans la bande du signal vidéo.

3. Dispositif selon la revendication 1 ou 2, dans lequel ladite fréquence dudit signal d'horloge fondamentale ($4F_{SC}$) est présélectionnée pour être quatre fois la fréquence de sous-porteuse couleur ($F_{SC}$).

4. Dispositif selon l'une quelconque des revendications précédentes, dans lequel ledit second moyen de génération du signal d'effacement (DD) génère le second signal d'effacement candidat (ACLR) lorsque ladite valeur de comptage dudit moyen de compteur correspond à une période qui est plus longue d'une demi-période ($2F_{SC}$) de la fréquence de sous-porteuse couleur ($F_{SC}$) que ladite période de balayage horizontal normale ($AH_{NORMAL}$).

5. Dispositif selon la revendication 4, dans lequel lesdits premiers moyens de génération de signal d'effacement (CC) sont constitués par un compteur 1135, et lesdits seconds moyens de génération du signal d'effacement (DD) sont constitués par un compteur 1137.

6. Dispositif selon l'une quelconque des revendications précédentes, dans lequel le ou chacun dudit second cycle de division, dans lequel le second signal d'effacement candidat (ACLR) est sélectionné, correspond à une ligne de balayage située du côté supérieur ou inférieur de chaque trame.

7. Dispositif selon la revendication 6, dans lequel ledit second cycle de division, ou un des seconds cycles de division est supérieur à un, dans lequel le second signal d'effacement de candidat (ACLR) est sélectionné, correspond à la 312 ième ou 625 ième ligne de balayage de chaque trame.

8. Montage de génération de signal vidéo comprenant un dispositif pour générer un signal de synchronisation horizontal comme revendiqué dans une quelconque des revendications précédentes.

9. Montage selon la revendication 8, dans lequel ledit dispositif est compris dans un générateur de synchronisation (19) du montage qui sert à générer ce signal de synchronisation horizontal ($H_{SYNC}$), ce signal de synchronisation vertical ($V_{SYNC}$), et divers autres signaux de temporisation en correspondance avec ledit signal d'horloge fondamentale ($4F_{SC}$) ;

le montage comprenant en outre :

un séquenceur de mémoire (13), raccordé pour recevoir des données de commande, des adresses de commande, et une horloge d'affichage de point, et aussi raccordé au générateur de synchronisation pour recevoir ledit signal de synchronisation horizontal ($H_{SYNC}$) et ledit signal de synchronisation vertical ($V_{SYNC}$), et utilisable pour commander diverses parties de mémoire (11, 12) du circuit et ;

un circuit décodeur de couleurs (17), raccordé fonctionnellement audit séquenceur de mémoire (13), pour décoder des signaux de points rouges, bleus, et verts de ladite image d'affichage spécifique selon les divers signaux de temporisation fournis par ledit générateur de synchronisation (19).

10. Montage selon la revendication 9, dans lequel ledit générateur de synchronisation (19) comprend :

un compteur horizontal (21), servant comme ledit moyen de compteur, et raccordé audit moyen de génération d'horloge (9) pour compter des impulsions dudit signal d'horloge fondamentale ($4F_{SC}$), pour fournir ladite valeur de comptage ;

un décodeur horizontal (22), servant comme ledit premier et second moyen de signal d'effacement, et raccordé audit compteur horizontal (21) pour contrôler la valeur de comptage fourni par ledit compteur horizontal (21) et pour générer ces premiers signaux d'effacement de candidat (NCLR) et ces seconds signaux d'effacement de candidat (ACLR), un tel second signal d'effacement de candidat (ACLR) étant fourni après une période ($1H_{LONG}$) qui est plus longue d'une demi-période de la fréquence de sous-porteuse de couleur ($F_{SC}$) que ladite période de balayage horizontal normale ($1H_{NORMAL}$) ; et

un sélecteur (29), servant comme ledit moyen de sélecteur, et raccordé audit décodeur horizontal (22) pour sélectionner soit le premier signal d'effacement de candidat (NCLR) soit le second signal d'effacement de candidat (ACLR), le second signal d'effacement de candidat (ACLR) étant sélectionné au moins une fois pendant chaque dite période de balayage vertical (1V).

11. Dispositif de commande d'affichage sur l'écran (OSCD) comprenant un montage selon l'une quelconque des revendications 8 à 10.

Fig. 1A

LIGHT — DARK

Sa

BLACK LEVEL

Fig. 1B

Sb

Fig. 1C

Sb″  Sb′

Fig. 1D

BLACK LEVEL

Fig. 1E

LIGHT — DARK

Sc

BLACK LEVEL

BLACK LEVEL

EP 0 472 373 B1

# Fig. 2A

(NTSC-SYSTEM)

# Fig. 2B

(1 WAVE LENGTH)

☐ [:::]: LIGHT

▨ ▧: DARK

16

# Fig. 3A

(PAL-SYSTEM)

# Fig. 3B

Fsc
(1 WAVE LENGTH)

☐ ⌐⌐⌐⌐ : LIGHT

▨ ▨ : DARK

# Fig. 4

**AA**

CLOCK SIGNAL
GENERATION
UNIT

BASIC
CLOCK

**BB**

COUNTER
UNIT

COUNTED VALUE

CLEAR SIGNAL

FIRST CANDIDATE
CLEAR SIGNAL

**CC**

**EE**

SELECTOR
UNIT

FIRST CLEAR SIGNAL
GENERATION UNIT

**DD**

SECOND CLEAR SIGNAL
GENERATION UNIT

SECOND CANDIDATE
CLEAR SIGNAL

# Fig. 5A

(PAL-SYSTEM)

Fsc
(1 WAVE LENGTH)

(2Fsc)
(1/2 WAVE LENGTH)

# Fig. 5B

Fsc
(1 WAVE LENGTH)

☐ ⟦⟧ : LIGHT

▨ ▨ : DARK

Fig. 6A

EXTERNAL BUS

10

CPU INTERFACE

4Fsc CLOCK

9 ~ XTAL

DISPLAY DOT CLOCK

COMMAND ADDRESS

COMMAND DATA

2

7

Fig. 6

| Fig. 6A | Fig. 6B | Fig. 6 C |
|---------|---------|----------|

EP 0 472 373 B1

Fig. 6B

EP 0 472 373 B1

SYNC GENERATOR  19

HSYNC

VSYNC

MEMORY SEQUENCER  13

RASTER ADDRESS  4

CODE ADDRESS  7

READ OUT CONTROL

CHARACTER GENERATOR ROM  12

ROW ADDRESS  4

COLUMN ADDRESS  5

CHARACTER CODE  7

READ/WRITE CONTROL

CHARACTER PATTERN  8

CHARACTER VRAM  11

PARALLEL/ SERIAL CONVERTER  14

COLOR REGISTER  15

BLUE (B)

RED (R)

GREEN (G)

**Fig.6C**

COLOR SUBCARRIER PHASE CONTROL SIGNAL

COMPOSITE SYNCHRONIZING SIGNAL

COMPOSITE BLANKING SIGNAL

COLOR BURST GATE SIGNAL

DISPLAY DOT SIGNAL

CHARACTER MODIFICATION CONTROL CIRCUIT — 16

BLUE DOT SIGNAL

RED DOT SIGNAL

GREEN DOT SIGNAL

COLOR DECODER CIRCUIT — 17

ANALOG SWITCHING CONTROL

29

LADDER REGISTER & ANALOG SWITCH — 18

COMPOSITE VIDEO SIGNAL

EP 0 472 373 B1

Fig. 7

# Fig. 8

19

etc, etc ···

Hsync

EQUIVALENT PULSE

21 HORIZONTAL COUNTER

22 HORIZONTAL DECODER

24 VERTICAL COUNTER

25 VERTICAL DECODER

etc, etc ···

VDISP

Vsync

CLK

½H PULSE

NCLR

ACLR

LLINE

CLR

CLR

VCLR

9

HCLR

29 SELECTOR

EP 0 472 373 B1

# Fig. 9

<u>29</u>

30

LLINE >

NCLR >

ACLR >

31

33

HCLR

32

# Fig. 10

| LLINE | HCLR |
|-------|------|
| 0 | ACLR |
| 1 | NCLR |

*Fig.11*

EP 0 472 373 B1

Fig. 12

## Fig. 13